# EUROPÄISCHE PATENTSCHRIFT

(11) **EP 4 592 149 B1**
(45) Veröffentlichungstag und Bekanntmachung des Hinweises auf die Patenterteilung: **28.10.2026**
(21) Anmeldenummer: 25154024.1
(22) Anmeldetag: 27.01.2025
(51) Int. Cl.: B60T 7/12, B60T 7/18, B60T 7/22, B60W 50/14

(54) **VERFAHREN ZUM BETREIBEN EINES NOTBREMSSYSTEMS, FAHRERASSISTENZSYSTEM UND KRAFTFAHRZEUG**
METHOD FOR OPERATING AN EMERGENCY BRAKING SYSTEM, DRIVER ASSISTANCE SYSTEM AND MOTOR VEHICLE
PROCÉDÉ DE FONCTIONNEMENT D'UN SYSTÈME DE FREINAGE D'URGENCE, SYSTÈME D'AIDE À LA CONDUITE ET VÉHICULE AUTOMOBILE

(30) Priorität: 25.01.2024 DE 102024200664
(43) Veröffentlichungstag der Anmeldung: 30.07.2025
(73) Patentinhaber: VOLKSWAGEN AG, 38440 Wolfsburg (DE)
(72) Erfinder: Kutsenok, Denis, 38440 Wolfsburg (DE); Walter, Felix, 38440 Wolfsburg (DE)

(56) Entgegenhaltungen:
- EP-B1- 2 874 851
- DE-A1- 102020 105 084
- DE-B4- 102016 001 955
- US-A1- 2012 265 418
- US-A1- 2019 054 904
- US-A1- 2019 337 495
- US-A1- 2020 039 481
- US-A1- 2023 033 316
- US-A1- 2023 182 694
- US-B2- 10 800 428
- US-B2- 11 173 898
- US-B2- 11 679 745

## Beschreibung

Die Erfindung betrifft ein Verfahren zum Betreiben eines Notbremssystems eines Kraftfahrzeuges, sowie ein zugehöriges Fahrerassistenzsystem und ein Kraftfahrzeug.

Innerhalb bekannter Fahrerassistenzsysteme von Kraftfahrzeugen existieren unter anderem Notbremssysteme, die dazu ausgebildet sind, eine Kollision mit Objekten und Personen, insbesondere während einer langsamen Fahrt, beispielsweise bis 10 km/h, bzw. bei Parkvorgängen zu verhindern. Bekannte Notbremssysteme weisen zum Beispiel Funktionen wie eine Rangierbremsfunktion oder AEB-PR (Automatic Emergency Braking Pedestrian Rear) auf. Hierzu können mittels eines Umfeldsensorsystems des Kraftfahrzeuges Objekte und Personen in einer Fahrzeugumgebung des Kraftfahrzeuges erkannt werden. Das Kraftfahrzeug kann dann mittels des Notbremssystems automatisch, also ohne ein Zutun eines Fahrers des Kraftfahrzeuges, durch Auslösen eines automatischen Notbremsvorganges gebremst werden, wenn das Notbremssystem eine Kollision mit dem Objekt oder einer Person in der Fahrzeugumgebung, insbesondere in einem prognostizierten Fahrschlauch, prognostiziert. Beispielsweise kann somit eine Kollision mit einem Fußgänger, welcher beim Rückwärtsausparken aus einer Parklücke hinter das Kraftfahrzeug läuft, verhindert werden.

Ein Problem solcher Notbremssysteme kann insbesondere darin liegen, dass deren Leistungsfähigkeit aufgrund von Limitierungen aktueller Sensorik bzw. bei der Interpretation einer Szene begrenzt sein können. So kann es beispielsweise sein, dass das Notbremssystem fälschlicherweise einen automatischen Notbremsvorgang auslöst, wenn basierend auf Sensordaten des Umfeldsensorsystems ein Objekt oder eine Person im prognostizierten Fahrschlauch des Kraftfahrzeuges unberechtigt als relevantes Kollisionsobjekt im Fahrschlauch prognostiziert wird. Zu dieser fälschlichen Erkennung kann es beispielsweise durch Signalreflexionen oder nicht korrekter Bilderkennung bzw. Bildinterpretation von Objekten, insbesondere Objekte im Fahrbahnbelag wie Gullideckel oder Regenablaufrinnen, als Kollisionsobjekte in der Fahrzeugumgebung kommen, oder auch durch Schattenbildungen in statischen und dynamischen Situationen. Ein fälschlich ausgelöster Notbremsvorgang durch das Notbremssystem, insbesondere in reproduzierbaren Szenarien wie beispielsweise dem Einparken in eine eigene Hofeinfahrt eines Nutzers des Kraftfahrzeuges, kann für den Nutzer sehr störend sein.

Zwar kann das Notbremssystem durch eine entsprechende Interaktion des Nutzers aktiv mittels einer Benutzerschnittstelle des Kraftfahrzeuges im Stand der Technik vor Fahrantritt deaktiviert werden, jedoch wird ein deaktivierter Zustand des Notbremssystem meist nicht über einen Zündungswechsel hinaus gespeichert. Gegebenenfalls muss der deaktivierte Zustand nach Fahrtantritt durch den Nutzer bestätigt werden. Dies bedeutet einen erhöhten Aufwand für eine Deaktivierung.

Die Druckschrift EP 3 351 441 A1 offenbart eine Vorrichtung für eine erhöhte Sicherheit während langsamen Fahrzeugbewegungen. Hierbei kann eine automatische Bremseinheit abhängig von einer Anfrage des Fahrers temporär deaktiviert werden.

Die DE 10 2020 105 084 A1 betrifft ein Rangierassistenzsystem zur Kollisionsverhinderung beim manuellen Rangieren eines Kraftfahrzeugs. Das Rangiersystem ist eingerichtet, Hindernisse im Fahrzeugumfeld zu detektieren und im Fall des Erkennens einer drohenden Kollision mit einem Hindernis eine Kollisionsverhinderungsmaßnahme auslösen, beispielsweise eine Notbremsung. Das Rangierassistenzsystem kennzeichnet sich dadurch, dass das Rangierassistenzsystem ferner eingerichtet ist, im Fall eines fahrerseitig unerwünschten Auslösens einer Kollisionsverhinderungsmaßnahme an einer Auslöse-Position des Kraftfahrzeugs eine Eingabe des Nutzers entgegenzunehmen. In Reaktion auf die Eingabe des Nutzers wird Positionsinformation betreffend eine Position des Kraftfahrzeugs gesichert. Wenn das Fahrzeug später die frühere Auslöse- Position erreicht, wird basierend auf der gesicherten Positionsinformation ein erneutes Auslösen der Kollisionsverhinderungsmaßnahme unterbunden.

Der Erfindung liegt die Aufgabe zugrunde, ein verbessertes Konzept für den Betrieb eines Notbremssystems, für ein Fahrerassistenzsystem und für ein Kraftfahrzeug anzugeben, welches den Komfort des Fahrzeugnutzers erhöht.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren beschrieben.

Ein erster Aspekt der Erfindung betrifft ein Verfahren zum Betreiben eines Notbremssystems eines Kraftfahrzeuges. Das Verfahren weist insbesondere die folgenden Schritte auf.
- Bereitstellen von Positionsdaten über eine geographisch begrenzte Fläche;
- Automatisches Deaktivieren des Notbremssystems, wenn sich das Kraftfahrzeug innerhalb des geographisch begrenzten Gebietes befindet.

Ein wesentlicher Vorteil dieses Konzeptes ist es, dass das Notbremssystem unter der angegebenen, notwendigen Bedingung, automatisch, also ohne ein Zutun eines Benutzers des Kraftfahrzeuges deaktiviert wird. Der Benutzer muss also nicht erste aktiv, beispielsweise durch eine Eingabe in eine Benutzerschnittstelle des Kraftfahrzeuges, das Notbremssystem deaktivieren. Dies kann insbesondere dann vorteilhaft sein, wenn der Benutzer in dem geographisch begrenzten Gebiet stets das Notbremssystem deaktiviert haben möchte. Dieser Wunsch kann beispielsweise daher kommen, dass in diesem Gebiet das Notbremssystem stets fälschlicherweise einen Notbremsvorgang auslöst, sodass der Benutzer stets durch die Notbremsung durch das Notbremssystem gestört wird. Es kann somit der Wunsch des Benutzers sein, jedes Mal, wenn er sich dem Gebiet mit dem Kraftfahrzeug annähert, das Notbremssystem zu deaktivieren, sodass dieses nicht fälschlicherweise auslöst. Dadurch das das Deaktivieren des Notbremssystems nun automatisch erfolgt, wenn sich das Kraftfahrzeug innerhalb des geographisch begrenzten Gebietes befindet, wird der Komfort des Benutzers deutlich erhöht.

Ein falscher, automatischer Notbremsvorgang kann beispielsweise daher kommen, dass basierend auf Sensordaten eines Umfeldsensorsystems des Kraftfahrzeuges eine Objekterkennungseinheit des Kraftfahrzeuges bzw. des Notbremssystems, fälschlicherweise ein Objekt oder eine Person in einer Fahrzeugumgebung des Kraftfahrzeuges, insbesondere in einem prognostizierten Fahrschlauch des Kraftfahrzeuges erkennt, und somit eine Kollision prognostiziert wird, worauf das Kraftfahrzeug mittels des Notbremssystems bremst. Beispielsweise können missinterpretierte Signalreflexionen, beispielsweise Ultraschallechos, von einem Regenablaufgitter oder von einem Gullideckel in einem Fahrbahnbelag einer Einfahrt zur fehlerhaften Objekterkennung führen. Ebenso kann es sein, dass das Regenablaufgitter oder der Gullideckel, beispielsweise basierend auf Bilddaten, unberechtigt als Kollisionsobjekte interpretiert werden. Da diese Objekte statisch sind, kann diese Störung daher wiederholt auftreten. Fehlinterpretationen können auch in dynamischen Situationen möglich sein, wie beispielsweise die Fehlinterpretation von Schatten als Kollisionsobjekt.

Die Objekterkennungseinheit kann insbesondere einen Objekterkennungsalgorithmus anwenden. Im Rahmen der vorliegenden Offenbarung kann ein Objekterkennungsalgorithmus als ein Computeralgorithmus verstanden werden, der in der Lage ist, eines oder mehrere Objekte innerhalb eines bereitgestellten Eingangsdatensatzes, insbesondere bereitgestellt durch das Umfeldsensorsystem, beispielsweise in Form eines Eingangsbildes, zu identifizieren und zu lokalisieren, insbesondere in dem Fahrschlauch zu prädizieren, beispielsweise indem er entsprechende Begrenzungsboxen oder Bereiche von Interesse, ROI (englisch: "region of interest"), festlegt und insbesondere jeder der Begrenzungsboxen eine entsprechende Objektklasse zuordnet, wobei die Objektklassen aus einem vordefinierten Satz von Objektklassen ausgewählt werden können. Dabei kann die Zuweisung einer Objektklasse zu einer Begrenzungsbox derart verstanden werden, dass ein entsprechender Konfidenzwert oder eine Wahrscheinlichkeit dafür, dass das innerhalb der Begrenzungsbox identifizierte Objekt zu der entsprechenden Objektklasse gehört, bereitgestellt wird. Zum Beispiel kann der Algorithmus für eine gegebene Begrenzungsbox für jede der Objektklassen einen solchen Konfidenzwert oder eine Wahrscheinlichkeit bereitstellen. Die Zuweisung der Objektklasse kann zum Beispiel die Auswahl oder Bereitstellung der Objektklasse mit dem größten Konfidenzwert oder der größten Wahrscheinlichkeit beinhalten. Alternativ kann der Algorithmus auch lediglich die Begrenzungsboxen festlegen, ohne eine entsprechende Objektklasse zuzuordnen.

Die Objekterkennungseinheit bzw. der Objekterkennungsalgorithmus kann insbesondere derart sein, dass dieser basierend auf Trainingsdaten aus statischen und/oder dynamischen Situationen trainiert und somit verbessert werden kann.

Ein Umfeldsensorsystem kann beispielsweise als Sensorsystem verstanden werden, das dazu in der Lage ist, Sensordaten oder Sensorsignale zu erzeugen, welche eine Umgebung Umfeldsensorsystems abbilden, darstellen oder wiedergeben. Das Umfeldsensorsystem kann insbesondere eine Vielzahl von Sensoreinheiten aufweisen, insbesondere Ultraschallsensoren, Lidar-Sensoren, Radar-Sensoren und/oder Kameras.

Unter dem elektronischen Notbremssystem kann insbesondere ein System verstanden werden, welches Notbremsfunktionen zum Notbremsen des Kraftfahrzeuges bereitstellt. Bekannte Funktionen sind beispielsweise Rangierbremsfunktionen, welche insbesondere auf Ultraschall basieren können und beim Langsamfahren oder beim Ein- oder Ausparken angewendet werden, um eine Kollision mit Objekten im Fahrschlauch in statischen und dynamischen Situationen zu vermeiden. Eine andere Funktion ist beispielsweise als AEB-PR (Automatic Emergency Braking Pedestrian Rear) bekannt, welches abhängig von erkannten Objekten, und insbesondere Personen, automatisch einen Notbremsvorgang auslöst.

Der Notbremsvorgang, den das Notbremssystem auslöst, soll insbesondere in einem Notfall automatisch ausgelöst werden, insbesondere dann, wenn eine Kollision prognostiziert wird, und der Fahrer des Kraftfahrzeuges nicht durch ein aktives Bremsen reagiert. Insofern ist das Notbremssystem zwingend von einem Bremsassistenzsystem zu unterscheiden, welches den Fahrer beim Bremsen lediglich unterstützt.

Die Positionsdaten können insbesondere digital auf einer Speichereinheit, beispielsweise des Kraftfahrzeuges, bereitgestellt und durch ein Fahrzeugassistenzsystem des Kraftfahrzeuges abgerufen werden. Insbesondere können die Positionsdaten dauerhaft gespeichert werden, sodass diese auch dauerhaft abgerufen werden können. Beispielsweise können die Positionsdaten geographische Koordinaten, insbesondere GPS-Koordinaten aufweisen, die das geographisch begrenzte Gebiet charakterisieren. Die Positionsdaten können insbesondere über eine Schnittstelle des Fahrerassistenzsystems bzw. des Notbremssystems eingelesen werden.

Das geographisch begrenzte Gebiet kann beispielsweise ein begrenztes Gebiet auf der Erdoberfläche sein, welches durch die Positionsdaten charakterisiert werden kann. Beispielsweise kann es sich bei dem geographisch begrenzten Gebiet um ein Grundstück, einem Teil eines Grundstückes, einen Straßenabschnitt oder um das Gebiet einer Siedlung handeln. Das geographische Gebiet kann auch Gebiet innerhalb eines sog. "Geofence" bezeichnet werden, welcher um das Gebiet gezogen werden kann.

Das Notbremssystem kann insbesondere mittels des elektronischen Fahrtassistenzsystems des Kraftfahrzeuges automatisch deaktiviert werden. Automatisch kann hierbei derart verstanden werden, dass dies ohne ein aktives Zutun des Benutzers erfolgt, sondern lediglich abhängig von der notwendigen Bedingung, dass sich das Kraftfahrzeug innerhalb des geographisch begrenzten Gebietes befindet, oder anders formuliert, wenn das Kraftfahrzeug in das geographisch begrenzte Gebiet hinein fährt.

Ob sich das Kraftfahrzeug innerhalb des geographisch begrenzten Gebietes befindet, kann beispielsweise durch Vergleich der gespeicherten Positionsdaten des Gebietes mit den erfassten Positionsdaten des Kraftfahrzeuges bestimmt werden. Beispielsweise können die Positionsdaten des Kraftfahrzeuges mittels eines elektronischen Positionssystems des Kraftfahrzeuges erfasst werden, beispielsweise mittels GPS-Signalen oder Triangulation.

Es ist insbesondere vorgesehen, dass das Notbremssystem vor dem Deaktivieren aktiviert ist. Durch das Deaktivieren kann es vorgesehen sein, dass die Funktionen des Notbremssystems nicht mehr bereitgestellt werden. Es kann jedoch möglich sein, das Notbremssystem erneut zu aktiveren, insbesondere mittels des Fahrerassistenzsystems.

Insbesondere kann es vorgesehen sein, dass das Notbremssystem deaktiviert bleibt, wenn das Kraftfahrzeug in dem geographisch begrenzten Gebiet abgestellt wird und zu einem späteren Zeitpunkt wieder gestartet wird.

Bei dem Verfahren kann es sich insbesondere um eine erfinderische Variante eines sog. "Geofencing" handeln, bei welchem bei Überschreiten der Grenze des geographisch begrenzten Gebietes eine Aktion automatisiert ausgelöst werden kann.

Das Bremssystem kann insbesondere ein Modul des Fahrerassistenzsystems sein. Hier und im Folgenden kann ein Modul als Hardwaremodul oder als Softwaremodul verstanden werden. Insbesondere kann ein Modul auch aus einer Hardware und einem auf der Hardware implementierten Softwareteil bestehen.

Ein Softwaremodul kann als ein Teil des Softwarecodes verstanden werden, der funktional zu einer Einheit verbunden und kombiniert ist. Ein Softwaremodul kann mehrere Verarbeitungsschritte und/oder Datenstrukturen umfassen oder implementieren. Ein Verfahrensschritt zur Bereitstellung eines Softwaremoduls kann so verstanden werden, dass er die Bereitstellung eines entsprechenden Softwarecodes in computerlesbarer Form auf einem computerlesbaren Speichermedium umfasst.

Es ist vorgesehen, dass automatisch ein Lernsystem aktiviert wird, wenn sich das Kraftfahrzeug innerhalb des geographisch begrenzten Gebietes befindet bzw. wenn das Notbremssystem automatisch deaktiviert wird. Mit anderen Worten wird das Lernsystem anstelle des Notbremssystem aktiviert. Das Lernsystem kann insbesondere durch das Fahrerassistenzsystem aktiviert und wieder deaktiviert werden. Darüber hinaus kann das Lernsystem auch aktiviert werden, wenn Informationen anderer Nutzer zu der Position des Kraftfahrzeuges aus der Cloud verfügbar sind.

Bevorzugt kann mittels des Lernsystems der Schritt erfolgen, dass ein Hinweis an einen Benutzer des Kraftfahrzeuges ausgegeben wird, wenn das aktivierte Notbremssystem ein Bremssignal zum Bremsen des Kraftfahrzeuges erzeugt hätte. Da das aktivierte Notbremssystem das Bremssignal abhängig von einer prognostizierten Kollision mit einem Objekt oder einer Person im prognostizierten Fahrschlauch des Kraftfahrzeuges erzeugt hätte, erzeugt nun das Lernsystem abhängig von einer prognostizierten Kollision mit einem Objekt oder einer Person im prognostizierten Fahrschlauch des Kraftfahrzeuges ein Signal zum Ausgeben des Hinweises. Entsprechend kann es vorgesehen sein, dass das Umfeldsensorsystem des Kraftfahrzeuges auch innerhalb des geographisch begrenzten Gebietes aktiv ist und nicht deaktiviert wird, da dieses für das Lernsystem ebenfalls benötigt wird.

Der Hinweis kann insbesondere abhängig von dem Signal des Lernsystems durch die Benutzerschnittstelle erfolgen, beispielsweise auf dem Bedienbildschirm und/oder zusätzlich durch ein akustisches Signal, welches gleichzeitig ein Warnsignal sein kann.

Bevorzugt kann mittels des Lernsystems der weitere Schritt erfolgen, dass abhängig von einem Feedback des Benutzers auf den Hinweis Daten über eine erfasste Umgebungssituation des Kraftfahrzeuges zum Zeitpunkt des Hinweises und über das Feedback gespeichert werden. Insbesondere werden Daten über das Feedback auf den Hinweis und Daten über die Umgebungssituation gemeinsam und einander zugeordnet auf der Speichereinheit und/oder auf einer Cloud abgespeichert.

Beispielsweise kann der Hinweis eine Frage an den Benutzer mit umfassen, ob der Hinweis basierend auf der Wahrnehmung der Fahrzeugumgebung des Benutzers gerechtfertigt war oder nicht. Entsprechend kann das Feedback ein Ja oder ein Nein sein. Das Feedback kann insbesondere Nein lauten, wenn unberechtigt eine Kollision mit einem Objekt oder einer Person prognostiziert wurde, beispielsweise weil ein Objekt, wie ein Gullideckel oder eine Regenablaufrinne, fälschlicherweise als Kollisionsobjekt erkannt wurde bzw. die Szene der statischen oder dynamischen Situation falsch interpretiert wurde.

Die Daten der Umgebungssituation können insbesondere Positionsdaten und Ausrichtungsdaten des Kraftfahrzeuges aufweisen, sowie Sensordaten des Umfeldsensorsystems zum Zeitpunkt des Hinweises, und/oder das als Kollisionsobjekt prognostizierte Objekt in der Fahrzeugumgebung.

Bevorzugt kann mittels des Lernsystems der weitere Schritt erfolgen, dass das Notbremssystem basierend auf den gespeicherten Daten maschinell trainiert wird. Insbesondere wird das Objekterkennungssystem basierend auf den gespeicherten Daten maschinell trainiert. Das Objekterkennungssystem kann hierzu eine maschinell trainierte Funktion aufweisen, mittels welcher zumindest Kollisionsobjekte im Fahrschlauch erkannt bzw. im Fahrschlauch in statischen oder dynamischen Situationen prädiziert werden können. Durch die gespeicherten Daten kann diese Funktion weiter trainiert werden, sodass die Objekterkennungseinheit dazu lernt. Insbesondere kann das Objekterkennungseinheit dazu lernen, wenn die Daten über das Feedback beinhalten, dass der Hinweis nicht gerechtfertigt war. So kann beispielsweise die Objekterkennungseinheit dazu lernen, ein bestimmtes, erkanntes Objekt, beispielsweise ein Gullideckel oder eine Regenablaufrinne, nicht mehr als Kollisionsobjekt zu erkennen, sodass zukünftig kein Notbremsvorgang mehr durch das Notbremssystem durchgeführt wird.

Insbesondere können bereits eine geringe Anzahl an Daten zum Trainieren ausreichend sein, wenn die Positionsdaten mit berücksichtigt werden. Insbesondere kann die Objekterkennungseinheit schnell lernen, dass ein erkanntes Objekt an einer bestimmten Position kein Kollisionsobjekt darstellt. Dadurch kann die Objekterkennungseinheit innerhalb des geographisch begrenzten Gebietes schnell und effektiv trainiert werden.

Der Vorteil bei der Verwendung des Lernsystems ist es insbesondere, dass das Notbremssystem innerhalb des geographisch begrenzten Gebietes nicht mehr deaktiviert werden muss, da das Notbremssystem zumindest insoweit trainiert wurde, dass statische Objekte in diesem Gebiet nicht mehr als Kollisionsobjekte erkannt werden und somit das Notbremssystem nicht mehr fälschlicherweise einen Notbremsvorgang auslöst.

Gemäß zumindest einem Ausführungsbeispiel ist es vorgesehen, dass die Positionsdaten mittels einer Schnittstelle des Kraftfahrzeuges durch einen Benutzer des Kraftfahrzeuges bereitgestellt werden.

Ein Vorteil besteht darin, dass der Benutzer selbst das geographisch begrenzte Gebiet durch eine entsprechende Eingabe vorgeben kann. Der Benutzer kann somit vorab selbst entscheiden, in welchem Gebiet das Notbremssystem automatisch deaktiviert werden soll.

Insbesondere ist eine Eingabe der Positionsdaten über das Gebiet lediglich einmalig erforderlich. Vorzugsweise werden die eingegebenen Positionsdaten auf der Speichereinheit gespeichert und somit dauerhaft bereitgestellt, sodass diese durch das Fahrerassistenzsystem eingelesen werden können. Der Komfort wird somit weiter erhöht, indem der Benutzer die Positionsdaten nicht bei jedem Start des Kraftfahrzeuges neu eingeben muss.

Die Schnittstelle kann insbesondere eine Benutzerschnittstelle (engl. Human-Machine-Interface, HMI) des Kraftfahrzeuges sein. Das HMI kann beispielsweise als Berührbildschirm ausgebildet sein, in welches der Benutzer die Positionsdaten auf geeignete Weise eingeben kann. Alternativ kann der Benutzer die Positionsdaten mittels Sprache oder Gestik eingeben.

Die Schnittstelle kann jedoch auch als Schnittstelle für ein kraftfahrzeugexternes, elektronisches Endgerät ausgebildet sein. Bei dem elektronischen Endgerät kann es sich beispielsweise um ein Smartphone des Benutzers handeln, welches mit der Schnittstelle, beispielsweise über Kabel, Bluetooth, IR, WiFi, Mobilfunk, Car2X oder dergleichen, signaltechnisch verbunden werden kann. Die Eingabe der Positionsdaten kann somit durch den Benutzer über das elektronische Endgerät erfolgen, welche dann an das Kraftfahrzeug weitergeleitet werden. Beispielsweise kann die Schnittstelle auch mit einer zentralen Servereinrichtung, beispielsweise einer Cloud, verbunden sein, sodass die Positionsdaten auch von der Cloud abgerufen werden können. Es kann vorgesehen sein, dass die Positionsdaten auch von anderen Nutzern in der Cloud bereitgestellt worden sind.

Gemäß zumindest einem Ausführungsbeispiel ist es vorgesehen, dass dem Benutzer eine digitale Karte bereitgestellt wird, wobei die Positionsdaten einer durch den Benutzer markierten Fläche auf der digitalen Karte entsprechen. Auf eine solche Weise kann der Benutzers vorteilhaft die Positionsdaten besonders nutzerfreundlich und intuitiv eingeben.

Die digitale Karte kann insbesondere auf dem Berührbildschirm oder auf dem Smartphone bzw. Tablet des Benutzers angezeigt werden. Beispielsweise kann der Nutzer einen Punkt auf der Karte markieren und einen zugehörigen Radius um diesen Punkt festlegen, um die Fläche bzw. das Gebiet zu definieren. Es kann möglich sein, ein Rechteck auf der Karte zu ziehen, oder mehrere Punkte markieren, die einen geschlossenen Polygonzug bilden, innerhalb welchem sich die markierte Fläche befindet. Darüber hinaus sind weitere Eingabemethoden möglich.

Gemäß zumindest einem Ausführungsbeispiel ist es vorgesehen, dass mittels einer Benutzerschnittstelle des Kraftfahrzeuges ein Hinweis an den Benutzer ausgegeben wird, wenn das Notbremssystem automatisch deaktiviert wird. Dadurch ergibt sich vorteilhaft, dass der Benutzer darauf aufmerksam gemacht wird, dass das Notbremssystem nicht mehr eingreift. Die Aufmerksamkeit des Benutzers auf den Straßenverkehr und damit die Sicherheit im Straßenverkehr kann somit erhöht werden, da sich der Benutzer nicht mehr auf das Notbremssystem verlässt.

Der Hinweis kann beispielsweise ein akustisches Signal in Form von Sprache oder eines Tons sein, welches über einen Lautsprecher des Kraftfahrzeuges ausgegeben wird. Alternativ oder zusätzlich kann der Hinweis visuell auf einem Bildschirm des Kraftfahrzeuges angezeigt werden, beispielsweise als Symbol oder Schrift. Weitere Hinweismöglichkeiten sind ebenfalls denkbar, beispielsweise das Vibrieren des Lenkrades, oder ein Hinweis auf einem gekoppelten Smartphone des Nutzers.

Gemäß zumindest einem Ausführungsbeispiel ist es vorgesehen, dass das Notbremssystem bei Verlassen des geographisch begrenzten Gebietes automatisch reaktiviert wird. Der Komfort kann insbesondere dadurch erhöht werden, dass der Benutzer nicht selbst das Notbremssystem wieder beim Verlassen des Gebietes aktivieren muss.

Durch das Reaktiveren bzw. erneute Aktivieren des Notbremssystems mittels des Fahrerassistenzsystems können insbesondere die Notbremsfunktionen wieder automatisch aktiviert werden.

Gemäß zumindest einem Ausführungsbeispiel ist es vorgesehen, dass das Verfahren lediglich in einem Einparkmodus oder in einem Langsamfahrmodus des Kraftfahrzeuges durchgeführt wird. Bevorzugt ist es vorgesehen, dass das Notbremssystem lediglich in einem Einparkmodus oder in einem Langsamfahrmodus des Kraftfahrzeuges aktiviert ist. Dies hat zur Folge, dass es das Notbremssystem auch lediglich in diesen Modi mittels des Verfahrens automatisch deaktiviert werden kann.

Beispielsweise kann der Benutzer den Einparkmodus und/oder den Langsamfahrmodus durch eine zugehörige Eingabe aktiveren. Alternativ kann der Einparkmodus und/oder der Langsamfahrmodus automatisch durch ein elektronisches System des Kraftfahrzeuges aktiviert werden. Beispielsweise wird der Einparkmodus automatisch aktiviert, wenn der Benutzer einen Rückwärtsgang einlegt oder dergleichen. Der Langsamfahrmodus kann insbesondere als ein Modus des Kraftfahrzeuges verstanden werden, bei welchem das Kraftfahrzeug langsamer fährt als eine vorgebbare Geschwindigkeitsschwelle und/oder bei welchem das Kraftfahrzeug ein vorgebbares, bei geringer Geschwindigkeit auszuführendes Manöver ausführt. Die Geschwindigkeitsschwelle kann beispielsweise bei 5, 10, 15 oder 20 Kilometer pro Stunde liegen. Das Manöver kann beispielsweise ein Anfahren, Einfahren, Ausfahren oder Parken sein. Der Langsamfahrmodus kann darüber hinaus beispielsweise automatisch aktiviert sein, wenn der erste Gang oder der zweite Gang oder der Rückwärts des Kraftfahrzeuges eingelegt ist.

Gemäß zumindest einem Ausführungsbeispiel ist es vorgesehen, dass die gespeicherten Daten über die erfasste Umgebungssituation und über das Feedback an eine kraftfahrzeugexterne Servereinrichtung gesendet werden. Daraus ergibt sich zumindest der Vorteil, dass diese Daten nicht nur kraftfahrzeugbezogen als Trainingsdaten verwendet werden können, sondern auch für Systeme einer Kraftfahrzeugflotte. Insbesondere kann durch die Vielzahl an durch die Servereinrichtung empfangenen Daten die Objekterkennungseinheit bereits im Auslieferungszustand eines zugehörigen Kraftfahrzeuges trainiert werden, sodass beispielsweise Gullideckel oder Regenablaufrinnen grundsätzlich nicht mehr als Kollisionsobjekte erkannt werden oder Situationen falsch interpretiert werden.

Das Kraftfahrzeug kann insbesondere drahtlos mit der Servereinrichtung signaltechnisch verbunden sein, beispielsweise mittels Mobilfunk oder Car2X. Bei der Servereinrichtung kann es sich beispielsweise um eine Cloud eines Kraftfahrzeugherstellers handeln.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Die Erfindung umfasst auch die Kombinationen der Merkmale der beschriebenen Ausführungsbeispiele.

Ein weiterer Aspekt der Erfindung betrifft ein Fahrerassistenzsystem, welches zumindest eine Recheneinheit aufweist. Das Fahrerassistenzsystem ist dazu ausgebildet ist, das erfindungsgemäße Verfahren durchzuführen.

Unter einem ein Fahrerassistenzsystem (englisch: "advanced driver assistance system", ADAS) kann ein System verstanden werden, welches den Fahrer beim teilweise automatisierten oder teilautonomen Fahren unterstützt. Insbesondere kann das elektronische Fahrzeugführungssystem einen teilweise automatisierten oder teilautonomen Fahrmodus nach den Stufen 1 bis 4 gemäß der SAE J3016-Klassifizierung implementieren. Hier und im Folgenden bezieht sich "SAE J3016" auf die entsprechende Norm in der Version vom April 2021.

Unter einer Recheneinheit kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten. Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Ein weiterer Aspekt der Erfindung betrifft ein Kraftfahrzeug, welches ein erfindungsgemäßes Fahrzeugassistenzsystem aufweist.

Im Folgenden werden Ausführungsbeispiele der Erfindung näher beschrieben. Hierzu zeigt:
Fig. 1 ein schematische Darstellung eines Ausführungsbeispiels eines erfindungsgemäßen Kraftfahrfahrzeuges;
Fig. 2 ein Ablaufdiagramm eines Ausführungsbeispiels eines erfindungsgemäßen Verfahrens.
Fig. 3 ein Ausführungsbeispiel einer digitalen Karte mit einer markierten Fläche.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In den Figuren sind funktionsgleiche Elemente jeweils mit denselben Bezugszeichen versehen.

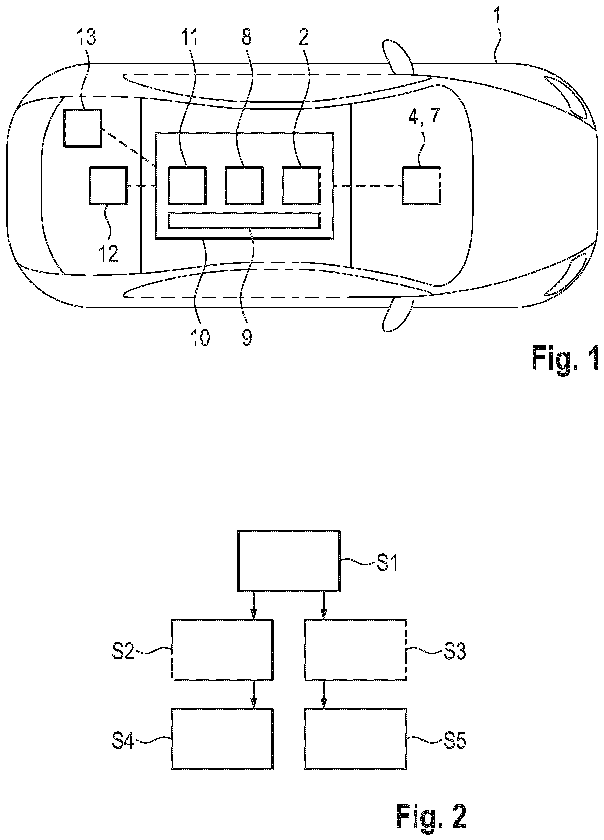

Fig. 1 zeigt ein schematische Darstellung eines Ausführungsbeispiels eines erfindungsgemäßen Kraftfahrfahrzeuges 1. Das Kraftfahrzeug 1 kann ein Fahrerassistenzsystem 10, ein Umfeldsensorsystem 12, eine Speichereinheit 13 und eine Schnittstelle 4 bzw. einer Benutzerschnittstelle 7 aufweisen, die signaltechnisch miteinander verbunden sein können.

Das Umfeldsensorsystem 12 kann beispielsweise als Sensorsystem verstanden werden, das dazu in der Lage ist, Sensordaten oder Sensorsignale zu erzeugen, welche eine Fahrzeugumgebung des Kraftfahrzeuges 1 abbilden, darstellen oder wiedergeben. Das Umfeldsensorsystem kann insbesondere eine Vielzahl von Sensoreinheiten aufweisen, insbesondere Ultraschallsensoren, Lidar-Sensoren, Radar-Sensoren und/oder Kameras.

Das elektronische Fahrerassistenzsystem 10 kann zumindest eine Recheneinheit 9 aufweisen, sowie insbesondere ein Notbremssystem 2, ein Lernsystem 8 und eine Objekterkennungseinheit 11.

Die elektronische Fahrerassistenzeinrichtung 10 kann unter anderem insbesondere dazu ausgebildet sein, das erfindungsgemäße Verfahren durchzuführen, welches anhand eines Ausführungsbeispiels in der Beschreibung zur Fig. 2 näher erläutert wird.

Basierend auf den Sensordaten des Umfeldsensorsystems 12 kann die Objekterkennungseinheit 12 Objekte oder Personen in der Fahrzeugumgebung des Kraftfahrzeuges 1 erkennen, insbesondere Objekte in einem prognostizierten Fahrschlauch in einem Parkmodus oder Langsamfahrmodus des Kraftfahrzeuges 1. Jedoch können bei der Objekterkennung Fehler unterlaufen, sodass ein Objekt im Boden der Fahrzeugumgebung fälschlicherweise als Kollisionsobjekt erkannt werden.

Das elektronische Notbremssystem 2 kann insbesondere ein Modul des Fahrerassistenzsystems 10 sein. Unter dem Notbremssystem 2 kann insbesondere ein System verstanden werden, welches Notbremsfunktionen zum Notbremsen des Kraftfahrzeuges 1 bereitstellt. Bekannte Funktionen sind beispielsweise Rangierbremsfunktionen, welche beim Langsamfahren oder beim Ein- oder Ausparken angewendet werden, um eine Kollision mit einem Objekt oder einer Person zu vermeiden. Eine andere Funktion ist beispielsweise als AEB-PR (Automatic Emergency Braking Pedestrian Rear) bekannt, welches abhängig von durch die Objekterkennungseinheit 12 erkannten Objekten, und insbesondere Personen, automatisch einen Notbremsvorgang auslöst.

Das elektronische Lernsystem 8 kann insbesondere ein Modul des Fahrerassistenzsystems 10 sein. Es kann vorgesehen sein, dass das Lernsystem 8 durch das Fahrerassistenzsystem 10 automatisch aktiviert werden kann. Weitere Details sind hierzu in der Beschreibung zur Fig. 2 näher erläutert.

In der Fig. 2 ist ein Ablaufdiagramm eines Ausführungsbeispiels eines erfindungsgemäßen Verfahrens zum Betreiben des Notbremssystems 2 eines Kraftfahrzeuges 1 gezeigt, welches insbesondere durch das Fahrassistenzsystem 10 durchgeführt werden kann. Das Verfahren wird insbesondere in einem Einparkmodus oder in einem Langsamfahrmodus des Kraftfahrzeuges 1 durchgeführt.

In einem ersten Schritt S1 können die Positionsdaten über das geographisch begrenzte Gebiet 3 bereitgestellt werden. Die Positionsdaten können insbesondere mittels einer Schnittstelle 4 des Kraftfahrzeuges 1, insbesondere der Benutzerschnittstelle 7 durch einen Benutzer bzw. Fahrer des Kraftfahrzeuges 1 bereitgestellt werden. Hierzu kann dem Benutzer mittels der Benutzerschnittstelle 7, beispielsweise ein Berührbildschirm, eine digitale Karte 5 bereitgestellt werden. In dieser digitalen Karte 5 kann der Benutzer nun eine Fläche 6 markieren, die den Positionsdaten entsprechen, beispielsweise durch Antippen oder Wischen auf dem Berührbildschirm. Diese Positionsdaten können dann auf der Speichereinheit 13 gespeichert werden und dauerhaft zur Verfügung stehen, sodass der Benutzer die Positionsdaten lediglich einmalig eingeben muss.

In einem zweiten Schritt S2 kann das Notbremssystems 2 durch das Fahrerassistenzsystem 10 automatisch deaktiviert werden, wenn sich das Kraftfahrzeug 1 innerhalb des geographisch begrenzten Gebietes 3 befindet. Hierzu kann es vorgesehen sein, dass mittels der Benutzerschnittstelle 7 des Kraftfahrzeuges 1 ein Hinweis an den Benutzer ausgegeben wird, dass das Notbremssystem 2 automatisch deaktiviert wird oder ist.

Parallel zu Schritt S2 kann in einem parallelen, dritten Schritt S3 automatisch das Lernsystem 8 aktiviert werden, wenn sich das Kraftfahrzeug 1 innerhalb des geographisch begrenzten Gebietes 3 befindet, wobei mittels des Lernsystems 8 ein Hinweis an einen Benutzer des Kraftfahrzeuges 1 ausgegeben wird, wenn das aktivierte Notbremssystem 2 ein Bremssignal zum Bremsen des Kraftfahrzeuges 1 erzeugt hätte, sowie abhängig von einem Feedback des Benutzers auf den Hinweis Daten über eine erfasste Umgebungssituation des Kraftfahrzeuges 1 zum Zeitpunkt des Hinweises und über das Feedback gespeichert werden, und das Notbremssystem 2 bzw. die Objekterkennungseinheit 11 basierend auf diesen Daten maschinell trainiert wird.

Wenn das Kraftfahrzeug 1 das geographisch begrenzte Gebiet 3 verlässt, kann es in einem vierten Schritt S4 bzw. in einem fünften Schritt S5 mittels dem Fahrerassistenzsystem 10 vorgesehen sein, dass Notbremssystem 2 wieder automatisch reaktiviert wird bzw. das Lernsystem 8 wieder automatisch deaktiviert wird.

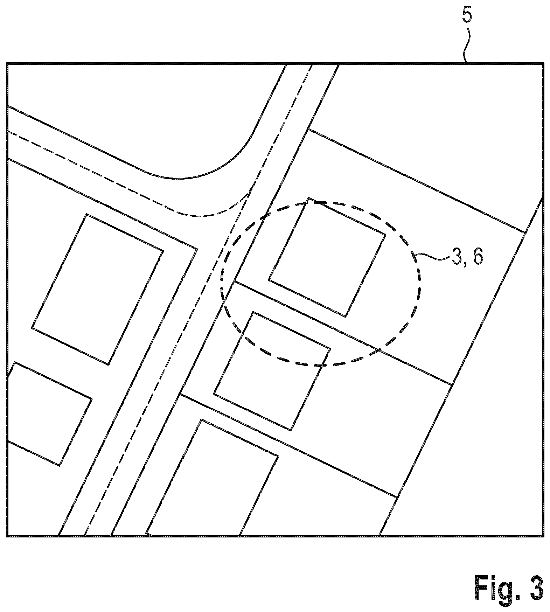

Fig. 3 zeigt ein Ausführungsbeispiel einer digitalen Karte 5 mit einer markierten Fläche 6, die das geographisch begrenze Gebiet 3 darstellen kann. Beispielsweise kann das Grundstück eines Einfamilienhauses, insbesondere dessen Einfahrt als Fläche 6 markiert werden, innerhalb welcher das Notbremssystem 2 deaktiviert bzw. das Lernsystem 11 aktiviert sein soll.

### Bezugszeichenliste

- 1: Kraftfahrzeug
- 2: Notbremssystem
- 3: Geographisch begrenztes Gebiet
- 4: Schnittstelle
- 5: Digitale Karte
- 6: Markierte Fläche
- 7: Benutzerschnittstelle
- 8: Lernsystem
- 9: Recheneinheit
- 10: Fahrerassistenzsystem
- 11: Objekterkennungseinheit
- 12: Umfeldsensorsystem
- 13: Speichereinheit

## Patentansprüche

1. Verfahren zum Betreiben eines Notbremssystems (2) eines Kraftfahrzeuges (1), aufweisend die Schritte:
- Bereitstellen von Positionsdaten über ein geographisch begrenztes Gebiet (3);
- Automatisches Deaktivieren des Notbremssystems (2), wenn sich das Kraftfahrzeug (1) innerhalb des geographisch begrenzten Gebietes (3) befindet,
- wobei automatisch ein Lernsystem (8) aktiviert wird, wenn sich das Kraftfahrzeug (1) innerhalb des geographisch begrenzten Gebietes (3) befindet, wobei mittels des Lernsystems (8)
- ein Hinweis an einen Benutzer des Kraftfahrzeuges (1) ausgegeben wird, wenn das aktivierte Notbremssystem (2) ein Bremssignal zum Bremsen des Kraftfahrzeuges (1) erzeugt hätte,
- abhängig von einem Feedback des Benutzers auf den Hinweis Daten über eine erfasste Umgebungssituation des Kraftfahrzeuges (1) zum Zeitpunkt des Hinweises und über das Feedback gespeichert werden, und
- das Notbremssystem (2) basierend auf den gespeicherten Daten maschinell trainiert wird.

2. Verfahren nach Anspruch 1, wobei
die gespeicherten Daten an eine kraftfahrzeugexterne Servereinrichtung gesendet werden.

3. Verfahren nach Anspruch 1 oder nach Anspruch 2, wobei
die Positionsdaten mittels einer Schnittstelle (4) des Kraftfahrzeuges (1) durch einen Benutzer des Kraftfahrzeuges (1) bereitgestellt werden.

4. Verfahren nach Anspruch 3, wobei
dem Benutzer eine digitale Karte (5) bereitgestellt wird, wobei die Positionsdaten einer durch den Benutzer markierten Fläche (6) auf der digitalen Karte (5) entsprechen.

5. Verfahren nach einem der vorherigen Ansprüche, wobei
mittels einer Benutzerschnittstelle (7) des Kraftfahrzeuges (1) ein Hinweis an den Benutzer ausgegeben wird, wenn das Notbremssystem (2) automatisch deaktiviert wird.

6. Verfahren nach einem der vorherigen Ansprüche, wobei
das Notbremssystem (2) bei Verlassen des geographisch begrenzten Gebietes (3) automatisch reaktiviert wird.

7. Verfahren nach einem der vorherigen Ansprüche, wobei
das Verfahren in einem Einparkmodus oder in einem Langsamfahrmodus des Kraftfahrzeuges (1) durchgeführt wird.

8. Fahrerassistenzsystem (10), aufweisend zumindest eine Recheneinheit (9), wobei das Fahrerassistenzsystem (10) dazu ausgebildet ist, ein Verfahren nach einem der vorherigen Ansprüche durchzuführen.

9. Kraftfahrzeug (1), aufweisend ein Fahrzeugassistenzsystem (10) nach Anspruch 8.

## Claims

1. Method for operating an emergency braking system (2) of a motor vehicle (1), comprising the steps of:
- providing position data over a geographically limited zone (3);
- automatically deactivating the emergency braking system (2) when the motor vehicle (1) is within the geographically limited zone (3),
- wherein a learning system (8) is automatically activated when the motor vehicle (1) is located within the geographically limited zone (3), wherein, by means of the learning system (8),
- a notification is issued to a user of the motor vehicle (1) if the activated emergency braking system (2) would have generated a braking signal to brake the motor vehicle (1),
- depending on feedback of the user regarding the notification, data regarding a detected environmental situation of the motor vehicle (1) at the time of the notification and regarding the feedback are stored, and
- the emergency braking system (2) is machine-trained on the basis of the stored data.

2. Method according to claim 1, wherein
the stored data are sent to a server facility external to the motor vehicle.

3. Method according to claim 1 or claim 2, wherein
the position data are provided by a user of the motor vehicle (1) via an interface (4) of the motor vehicle (1).

4. Method according to claim 3, wherein
a digital map (5) is provided to the user, wherein the position data correspond to an area (6) marked by the user on the digital map (5).

5. Method according to any of the preceding claims, wherein
a notification is issued to the user via a user interface (7) of the motor vehicle (1) when the emergency braking system (2) is automatically deactivated.

6. Method according to any of the preceding claims, wherein
the emergency braking system (2) is automatically reactivated when the geographically limited zone (3) is left.

7. Method according to any of the preceding claims, wherein
the method is carried out in a parking mode or in a slow-speed driving mode of the motor vehicle (1).

8. Driver assistance system (10) comprising at least a computing unit (9), wherein the driver assistance system (10) is designed to perform a method according to any of the preceding claims.

9. Motor vehicle (1), comprising a vehicle assistance system (10) according to claim 8.

## Revendications

1. Procédé permettant de faire fonctionner un système de freinage d'urgence (2) d'un véhicule automobile (1), présentant les étapes consistant à :
- fournir des données de position concernant une zone délimitée géographiquement (3) ;
- désactiver automatiquement le système de freinage d'urgence (2) lorsque le véhicule automobile (1) se trouve au sein de la zone délimitée géographiquement (3),
- dans lequel un système d'apprentissage (8) est automatiquement activé lorsque le véhicule automobile (1) se trouve au sein de la zone délimitée géographiquement (3), dans lequel, au moyen du système d'apprentissage (8),
- un avertissement est envoyé à un utilisateur du véhicule automobile (1) lorsque le système de freinage d'urgence (2) activé aurait généré un signal de freinage destiné à freiner le véhicule automobile (1),
- en fonction de la réponse de l'utilisateur à l'avertissement, des données relatives à une situation de l'environnement du véhicule automobile (1) détectée au moment de l'avertissement et la réponse sont enregistrées, et
- le système de freinage d'urgence (2) est entraîné automatiquement sur la base des données enregistrées.

2. Procédé selon la revendication 1, dans lequel
les données enregistrées sont transmises à un appareil formant serveur externe au véhicule.

3. Procédé selon la revendication 1 ou la revendication 2, dans lequel
les données de position sont fournies par un utilisateur du véhicule automobile (1) au moyen d'une interface (4) du véhicule automobile (1).

4. Procédé selon la revendication 3, dans lequel
une carte numérique (5) est fournie à l'utilisateur, dans lequel les données de position correspondent à une surface (6) marquée par l'utilisateur sur la carte numérique (5).

5. Procédé selon l'une des revendications précédentes, dans lequel
un avertissement est envoyé à l'utilisateur au moyen d'une interface utilisateur (7) du véhicule automobile (1) lorsque le système de freinage d'urgence (2) est désactivé automatiquement.

6. Procédé selon l'une des revendications précédentes, dans lequel
le système de freinage d'urgence (2) est réactivé automatiquement lorsque le véhicule quitte la zone délimitée géographiquement (3).

7. Procédé selon l'une des revendications précédentes, dans lequel
le procédé est réalisé dans un mode de stationnement ou dans un mode de conduite à basse vitesse du véhicule automobile (1).

8. Système d'aide à la conduite (10), présentant au moins une unité de calcul (9), dans lequel le système d'aide à la conduite (10) est configuré pour réalisé un procédé selon l'une des revendications précédentes.

9. Véhicule automobile (1), présentant un système d'aide au véhicule (10) selon la revendication 8.
